# EUROPEAN PATENT APPLICATION

(11) **EP 3 848 858 A1**
(43) Date of publication of application: **14.07.2021**
(21) Application number: 20208884.5
(22) Date of filing: 20.11.2020
(51) Int. Cl.: G06N 3/08, G06N 3/04

(54) **INFORMATION PROCESSING APPARATUS, NEURAL NETWORK COMPUTATION PROGRAM, AND NEURAL NETWORK COMPUTATION METHOD**

(30) Priority: 09.01.2020 JP 2020002016
(71) Applicant: FUJITSU LIMITED, Kanagawa 211-8588 (JP)
(72) Inventor: Sakai, Yasufumi, Kanagawa, 211-8588 (JP)
(74) Representative: Hoffmann Eitle

(57) **Abstract**

A processor quantizes a plurality of first intermediate data obtained from a training into intermediate data of a first fixed-point number according to a first fixed-point number format, obtains a first quantization error between the first intermediate data and the intermediate data of the first fixed-point number, quantizes the first intermediate data into intermediate data of a second fixed-point number according to a second fixed-point number format, and obtains a second quantization error between the first intermediate data and the intermediate data of the second fixed-point number. The processor compares the first quantization error with the second quantization error and determine as a determined fixed-point number format the fixed-point number format having the lower of the quantization errors, and executes the training operation with intermediate data of a fixed-point number obtained by quantizing the plurality of first intermediate data according to the determined fixed-point number format.

## Description

### FIELD

The present invention relates to an information processing apparatus, a neural network computation program, and a neural network computation method.

### BACKGROUND

In recent years, neural networks have made significant progress in a field such as a field of image recognition. In such a field, image recognition rates have been improved by using deep neural networks (called "DNNs" hereinafter), i.e., more complex configurations of neural networks (called "NNs" hereinafter). With the NNs or the DNNs (collectively referred to as "NN or the like" hereinafter) having more complex configurations, number of operations and using amount of memory by computers have been increased.

As a method of reducing the number of operations and an amount of memory used in a computer that executes operations for the NN or the like, quantizing (or converting) intermediate data, including parameters such as weights in the NN or the like and activation data input to neurons, into a fixed-point number with a low number of bits has been proposed. Such a method is disclosed in M. Rastegari et al, "XNOR-Net ImageNet Classification Using Binary Convolutional Neural Networks", arxiv, 2016, Japanese Laid-open Patent Publication No. 2018-124681, and Japanese Patent Application Publication No. 2018-10618, for example. By quantizing the intermediate data to reduce the number of bits, reduction of the amount of operations for the intermediate data and of the amount of memory used to store the intermediate data is realized. Even if the accuracy, with which the intermediate data is representable through the quantization, is low, the image recognition rate by the NN or the like does not drop significantly. Another prior art is A. Canziani, et al, "An Analysis of Deep Neural Network Models for Practical Applications", arxiv, 2016.

### SUMMARY

A method has been proposed in which, when quantizing the intermediate data to a fixed-point number, a Q format having a bit width of the integer part and decimal part of the fixed-point number is determined based on a distribution of positions of the most significant bits that are unsigned bit (the unsigned bit means "1" if a sign bit is 0 or "0" if the sign bit is 1) in the intermediate data. Japanese Patent Application Publication No. 2018-124681 corresponds to this.

However, although determining the Q format based on the distribution of the positions of the unsigned most significant bits enables setting the Q format somewhat appropriately, this does not necessarily ensure that the best Q format is detected. As such, under unexpected circumstances, the position of the significant bits (or effective bits) (that is unsigned bit, "1" when positive and "0" when negative) of the intermediate data may differ significantly from the position of a bit range of the Q format, causing an increase in quantization error resulting from the quantization (or conversion) into a fixed-point number. In this case, the recognition precision and accuracy rate of the NN or the like may drop significantly.

Accordingly, an object of a first aspect of the present embodiment is to provide an information processing apparatus, a neural network computation program, and a neural network computation method which reduce quantization error.

According to an aspect of the embodiments, an information processing apparatus that executes training of a neural network, the apparatus includes, a processor, and a memory that is accessed by the processor, wherein the processor: quantizes a plurality of first intermediate data obtained by a predetermined operation of the training into a plurality of intermediate data of a first fixed-point number respectively according to a first fixed-point number format having a first bit length and first exponent information of a least significant bit of a fixed-point number, obtains a first quantization error respectively between the plurality of first intermediate data and the plurality of intermediate data of the first fixed-point number, quantizes the plurality of first intermediate data into a plurality of intermediate data of a second fixed-point number respectively according to a second fixed-point number format having a second bit length and second exponent information of a least significant bit of a fixed-point number, obtains a second quantization error respectively between the plurality of first intermediate data and the plurality of intermediate data of the second fixed-point number, compares the first quantization error with the second quantization error and determine as a determined fixed-point number format the fixed-point number format having the lower of the first and second quantization errors, and executes the predetermined operation with a plurality of intermediate data of a determined fixed-point number obtained by quantizing the plurality of first intermediate data according to the determined fixed-point number format.

### BRIEF DESCRIPTION OF DRAWINGS

FIG. 1 is a diagram illustrating an example of the configuration of a deep neural network (DNN).
FIG. 2 is a diagram illustrating an example of the configuration of an information processing apparatus including a computational processing unit according to the present embodiment.
FIG. 3 is a diagram illustrating a flowchart of training a typical NN or the like.
FIG. 4 illustrates an example of the forward propagation processing and the back-propagation processing.
FIG. 5 is a diagram illustrating a flowchart of training an NN or the like according to the present embodiment.
FIG. 6 illustrates the fixed-point number format.
FIG. 7 is a diagram illustrating candidates for the fixed-point number format with respect to the intermediate data.
FIG. 8 is a diagram illustrating the processing for determining the fixed-point number format.
FIG. 9 is a diagram illustrating a specific example of the fixed-point number format determination processing described above.
FIG. 10 is a diagram illustrating an example of the configuration of the accelerator processor 14.
FIG. 11 illustrates flowcharts of processing for determining the fixed-point number format according to the third embodiment.
FIG. 12 is a diagram illustrating a flowchart for inference according to the fourth embodiment.
FIG. 13 is a diagram illustrating two types of training flowcharts, according to a fifth embodiment.
FIG. 14 illustrates a training result (1) of a handwritten number recognition task when the intermediate data is quantized through the method described in Japanese Patent Application Publication No. 2018-124681, and a training result (2) of the same task when the intermediate data is quantized according to the present embodiment.

### DESCRIPTION OF EMBODIMENTS

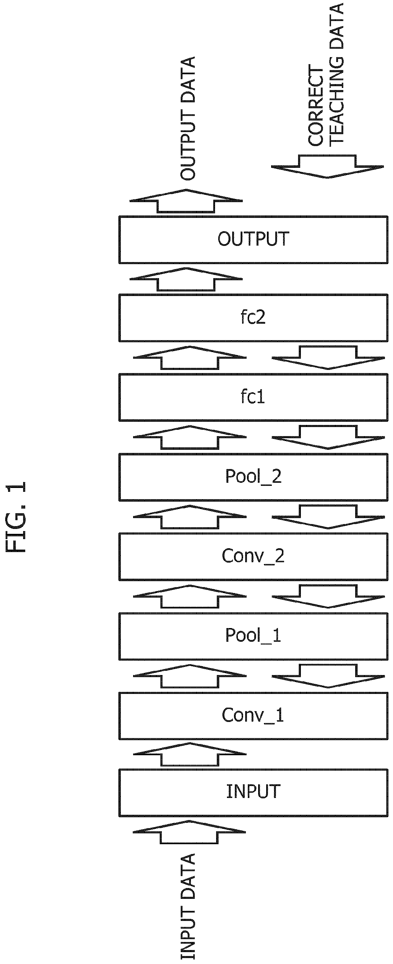

FIG. 1 is a diagram illustrating an example of the configuration of a deep neural network (DNN). The DNN illustrated in FIG. 1 is an object category recognition model in which, for example, image data is input and classified into a finite number of categories according to the content of the input image (e.g., numbers). The DNN includes an input layer INPUT, a first convolutional layer Conv_1, a first pooling layer Pool_1, a second convolutional layer Conv_2, a second pooling layer Pool_2, a first fully-connected layer fc1, a second fully-connected layer fc2, and an output layer OUTPUT. Each layer has nodes corresponding to a single or multiple neurons.

The convolutional layer Conv_1 calculates sums of products of, for example, weights or the like associated with nodes within the convolutional layer Conv_1 on, for example, pixel data of the image input to the plurality of nodes in the input layer INPUT, and inputs the sums of products to the plurality of nodes in the convolutional layer Conv_1 as activation values. Furthermore, the activation values are input to activation functions of the nodes of the convolutional layer Conv_1, and pixel data of an output image having features of the image are output. The same applies to the convolutional layer Conv_2.

The pooling layer Pool_1 is a layer in which values determined from local nodes of the previous convolutional layer Conv_1 are calculated as values of its own nodes, and which, for example, absorbs slight changes in images by taking the maximum value of a local node as the value of its own node.

The output layer OUTPUT finds a probability of belonging to each category from the values of the nodes using a softmax function or the like, and outputs that probability as output data.

In the process for training a DNN, an error function based on a difference between the output data from each node in the output layer, and the correct teaching data in training data, is calculated, and parameters such as weights in each layer are updated to minimize the error of the error function. The parameters are generally updated through gradient descent. Additionally, error back-propagation is used as the computation processing in the gradient descent.

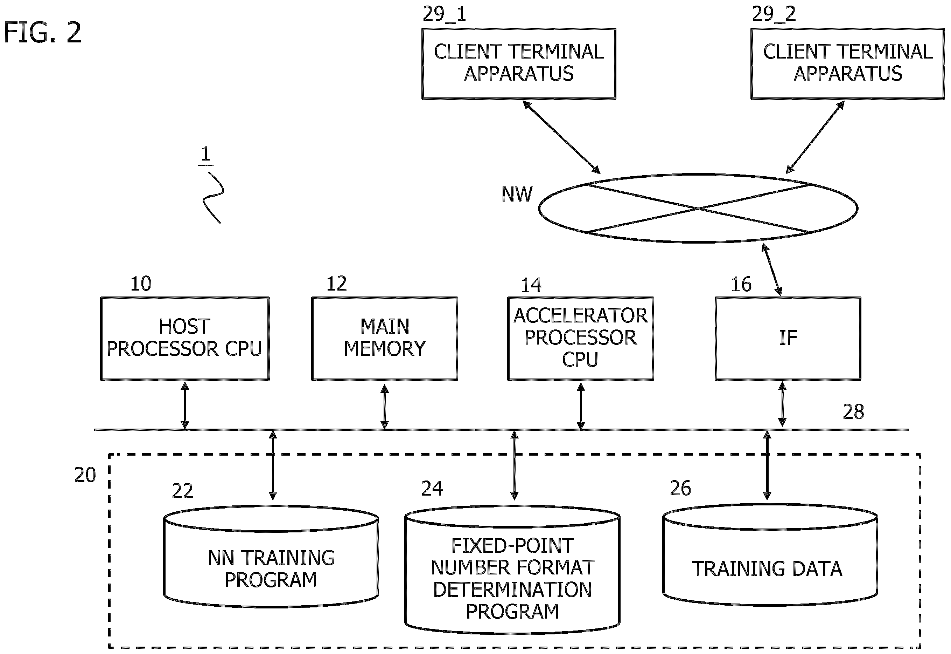

FIG. 2 is a diagram illustrating an example of the configuration of an information processing apparatus including an arithmetic processing unit according to the present embodiment. An information processing apparatus 1 is a general-purpose computer, e.g., a personal computer, a server, a high-performance computer (HPC), or the like. The information processing apparatus includes a host processor 10, such as a central processing unit (CPU), main memory 12, an accelerator processor 14 which is a sub-processor, a network interface 16, an auxiliary storage device 20 such as an ample-capacity HDD or SSD, and a bus 28 connecting those elements to each other.

The auxiliary storage device 20 stores, in addition to basic software such as an OS (not illustrated), a training and inference program 22 that executes training and inference processing for the NN or the like, a fixed-point number format determination program 24, and training data 26 used for training the NN or the like.

The host processor 10 executes the training and inference program 22 expanded in the main memory 12 to perform processing for training the NN or the like. The host processor 10 also executes the expanded training and inference program to perform processing for inference by the NN or the like. While the training processing or inference processing is being executed, the host processor 10 causes the accelerator processor 14 to execute special computational instructions, such as matrix operations and convolutional operations, included in the training and inference program.

Furthermore, the host processor 10 executes the fixed-point number format determination program 24, which has been expanded in the main memory 12, to determine an optimal fixed-point number format for quantizing (converting) intermediate data of the NN or the like to a fixed-point number having a predetermined number of bits. The fixed-point number format includes a number of bits and exponent information of the least significant bit. Once the number of bits and the exponent of the least significant bit are determined, the position of the decimal point of the fixed-point number is set, and the quantization position used when converting to a fixed-point number is set as well. The power of the exponent of the least significant bit of the fixed-point number corresponds to the resolution of the fixed-point number.

The information processing apparatus 1 can be accessed from a plurality of client terminal apparatuses 29_1 and 29_2 over a network NW. For example, the client terminal apparatus 29_1 accesses the information processing apparatus 1 and sends the training data for training the NN or the like according to a desired machine model and stores that training data in the auxiliary storage device 20. Then, in response to an instruction to commence training from the client terminal apparatus 29_1, the host processor 10 executes the training and inference program, and performs the processing of training the NN or the like using the provided training data.

Once the NN or the like has been optimized to the desired machine model by the training processing, the client terminal apparatus 29_2 transmits input data for inference over the network and requests inference processing; then, the host processor 10 executes the training and inference program, and performs inference operations of the NN or the like based on the provided input data for inference. The host processor 10 then returns the output data from the inference to the client terminal apparatus 29_2 that sent the inference request.

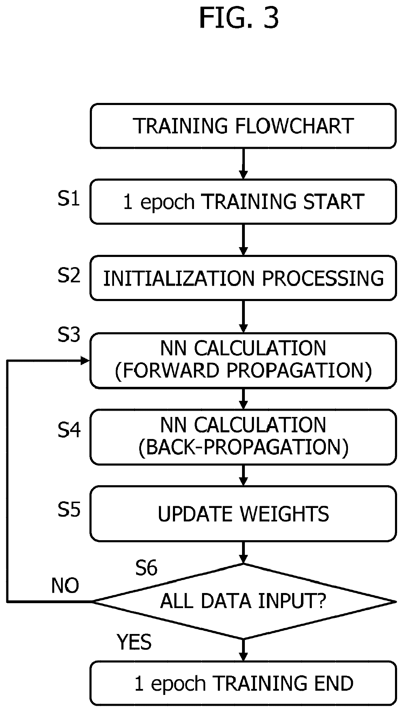

FIG. 3 is a diagram illustrating a flowchart of typical training an NN or the like. In the training of an NN or the like, the training data is divided into units called "mini-batches". Parameters such as the weights in the NN or the like are then updated on a mini-batch basis. A unit of training processing using training data in a plurality of mini-batch units is called an "epoch".

In FIG. 3, when the processor executes the training and inference program to start the training in a single epoch (S1), initialization processing such as dividing the training data into mini-batches is executed (S2). At the start of the first mini-batch, the processor also assigns initial values to parameters such as weights and biases in the NN or the like as initialization processing.

Next, taking the training data in one mini-batch as input data, the processor executes operations of the multiple layers of the NN or the like, in order from the input layer side to the output layer side (S3). This is forward propagation processing S3. In the example of the NN or the like illustrated in FIG. 1, the processor inputs the input data of the training data into the input layer INPUT and executes the convolution operations of the convolutional layer Conv_1 on the input data. Next, the processor executes the operations of the pooling layer Pool_1 on the output data from the convolutional layer Conv_1. In the same manner thereafter, the processor executes the operations of each layer in the forward direction towards the output layer OUTPUT and calculates the output data of the output layer OUTPUT.

Next, the processor calculates error by calculating a loss function based on a difference between the output data of each node in the output layer OUTPUT and the correct teaching data of the training data, and updates parameters such as the weights in the NN or the like so as to reduce the error through gradient descent. Specifically, the processor executes a back-propagation operation to find the error in each layer by propagating a difference between the correct teaching data and the output data, calculated from the input data of the training data in one mini-batch, in the backward direction, i.e., from the output layer toward the input layer (S4). The processor then updates the parameters such as the weights through gradient descent based on the error back-propagated in each layer (S5). The processor updates the parameters in each mini-batch.

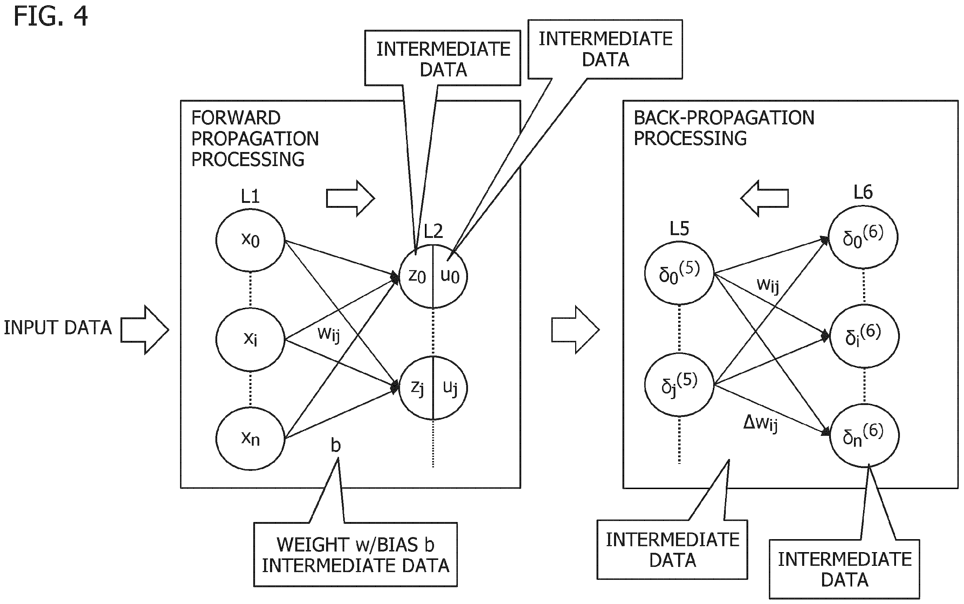

FIG. 4 illustrates an example of the forward propagation processing and the back-propagation processing. In the forward propagation processing, the processor multiplies data X₀-Xₙ of each node in a layer L1 near the input side by weights Wᵢⱼ on corresponding links, calculates the multiple values, and adds the value of a bias b, to compute activation data Z₀-Zⱼ ... input to the nodes in a layer L2 near the output side. Furthermore, the activation function of the layer L2 computes output data U₀-Uⱼ ... of the activation function with respect to the activation data Z₀-Zⱼ .... The processor repeats the operations in the layers L1 and L2 in order from the input side to the output side.

On the other hand, in the back-propagation processing, the processor calculates error δ₀(5)-δⱼ(5) ... in a layer L5 near the input side from a difference from each node in a layer L6 near the output side (a difference or a back-propagated difference between the output data and the correct teaching data) δ₀(6)-δᵢ(6)-δₙ(6). Then, differential update data ΔWᵢⱼ of the weights is computed in accordance with the sign (direction of the slope) and the magnitude of a value that is differentiated the error of the loss function by a parameter such as the weight Wᵢⱼ, based on the error δ₀(5)-δᵢ(5)-δₙ(5) of the layer L5. The processor repeats the operations in the layers L6 and L5 in order from the output side to the input side.

Furthermore, the processor calculates updated weights Wᵢⱼ by adding the differential update data ΔWᵢⱼ to the existing weights Wᵢⱼ in processing that updates the parameters such as the weights of each layer in order.

The parameters such as the pre-update weights Wᵢⱼ before updated and bias b, the activation data Z₀-Zⱼ ... and the activation function output data U₀-Uⱼ ... in the layer L2, the error δ₀(6)-δᵢ(6)-δₙ(6) and error δ₀(5)-δⱼ(5) ... in the layers L6 and L5, the differential update data ΔWᵢⱼ of the weights, and the updated weights Wᵢⱼ and bias b, illustrated in FIG. 4, are intermediate data of the NN or the like. By setting the bit range of this intermediate data to an optimal position using a fixed-point number format, the quantization error in the intermediate data quantized according to the fixed-point number format can be reduced, and the accuracy of the training can be increased.

Returning to FIG. 3, the processor repeats the forward propagation processing S3, the back-propagation processing S4, and the weight update processing S5 described above for the training data in each of the multiple mini-batches obtained from the division, until all mini-batches are complete ("YES" in S6). When the processing of S3 to S5 is complete for all the mini-batches of the training data, the training of one epoch is completed.

### First Embodiment

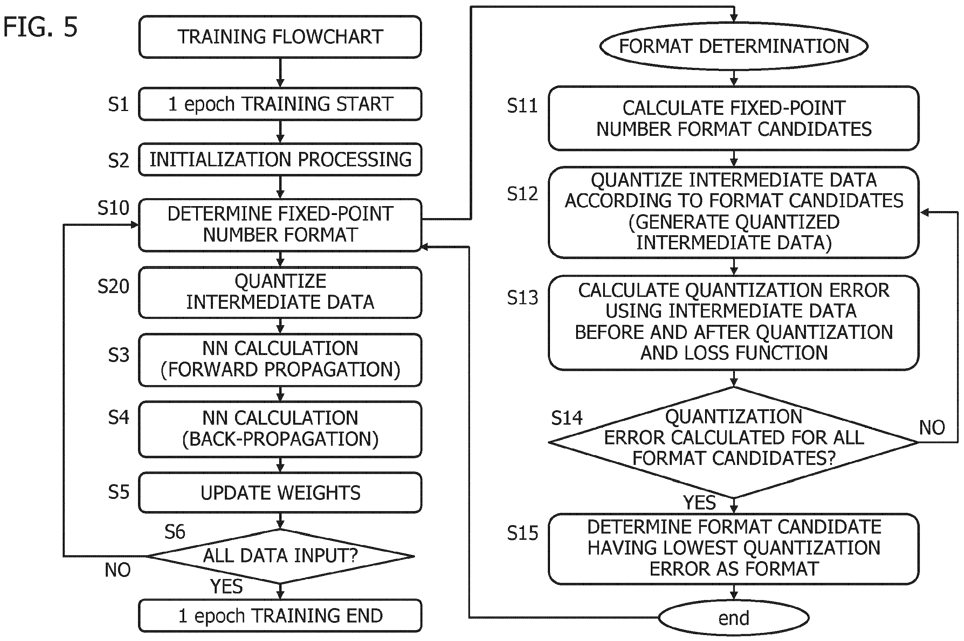

FIG. 5 is a diagram illustrating a flowchart of training an NN or the like according to the present embodiment. The present embodiment assumes that the processor executes the training and inference program to execute the operations of the processing for training the NN or the like using a fixed-point computing unit in an accelerator processor. The intermediate data of the NN or the like generated through the training operations is quantized to a fixed-point number using a predetermined fixed-point number format and stored in a general-purpose register within the processor, the main memory, or the like. Furthermore, the quantized intermediate data stored in the register of the processor, the main memory, or the like is read out in subsequent training operations and input to the fixed-point computing unit.

The fixed-point computing unit includes, for example, an operand register in which the input values are stored, a register for storing data obtained during computations, a result register in which computation results are stored, and the like. Registers in such fixed-point computing units generally have longer bit lengths, with lower exponents for the least significant bits, than quantized fixed-point numbers. Therefore, the resolution of the intermediate data in the registers within the fixed-point computing unit is lower and denser than the resolution of the quantized intermediate data.

With the fixed-point computing unit, multiplication results will become up to twice the bit length of the input data. Addition results may also have longer bit lengths than the input data due to overflow. However, in the present embodiment, the intermediate data generated through the operations of training the NN or the like is quantized according to the fixed-point number format and converted to a fixed-point number with a short bit length and low resolution when that intermediate data is stored in the general-purpose register, main memory, or the like of the processor from the result register of the computing unit. Specifically, the processor 10 or 14 quantizes the intermediate data by rounding the least significant-side bits of the intermediate data and saturating the most significant-side bits of the intermediate data based on the bit length and the exponent information of the least significant bit both of the fixed-point number format. In other words, the quantization is processing of limiting the bits of the intermediate data to a range of digits determined based on the bit length and the exponent information of the least significant bit of the fixed-point number format. This processing limits the bits of the intermediate data to the bits from a less significant bit based on the exponent information of the least significant bit to a more significant bit by the aforementioned bit length.

In addition to the same processing steps S1 to S6 as those in FIG. 3, the flowchart in FIG. 5 includes a fixed-point number format determination processing S10 and quantization processing S20 for intermediate data such as parameters. In FIG. 5, the fixed-point number format determination processing S10 is indicated by processing steps S11 to S15.

According to the present embodiment, the processors 10 and 14 execute the training and inference program 22 to execute the same processing steps S1 to S6 as in FIG. 3, as well as the parameter quantization processing S20. Furthermore, the processor 10 executes the fixed-point number format determination program 24 to executes the fixed-point number format determination processing S10 including the processing steps of S11 to S15.

In the initialization processing S2, the processor 10 divides the training data into mini-batches and assigns initial values to parameters, such as weights, in the NN. The processor then determines the fixed-point number format of the intermediate data such as parameters (S10). In the first mini-batch of one epoch, the intermediate data is set to the initial values, and thus in the determination processing S10, the processor determines a predetermined fixed-point number format which is optimal for the initial values. The processor then converts (or quantizes) the initial values of the intermediate data to fixed-point numbers according to the determined fixed-point number format (S20).

The processors 10 and 14 then perform the aforementioned forward propagation processing for the input data of the training data in the first mini-batch (S3), perform the back-propagation processing based on the difference between the output data of the NN or the like obtained through the forward propagation processing and the correct teaching values of the training data (S4), and update the parameters, such as the weights, in the NN or the like (S5).

Next, before performing the forward propagation processing based on the training data of the next mini-batch, the processor 10 determines the optimal fixed-point number format for the intermediate data of the NN or the like, calculated with the training data of the previous mini-batch (S10).

This processing S10 of determining the optimal fixed-point number format is as follows. First, based on the range of values in the intermediate data of the NN or the like, computed in the previous mini-batch, the processor 10 determines candidates for the fixed-point number format (S11). The fixed-point number format includes, for example, a fixed-point number bit length and exponent information of the least significant bit. Alternatively, the fixed-point number format includes the number of bits in the integer part and the number of bits in the decimal part. However, if the number of bits in the decimal part is zero, of if the number of bits in the integer part is zero, the fixed-point number format is determined according to the fixed-point number bit length and the exponent information of the least significant bit.

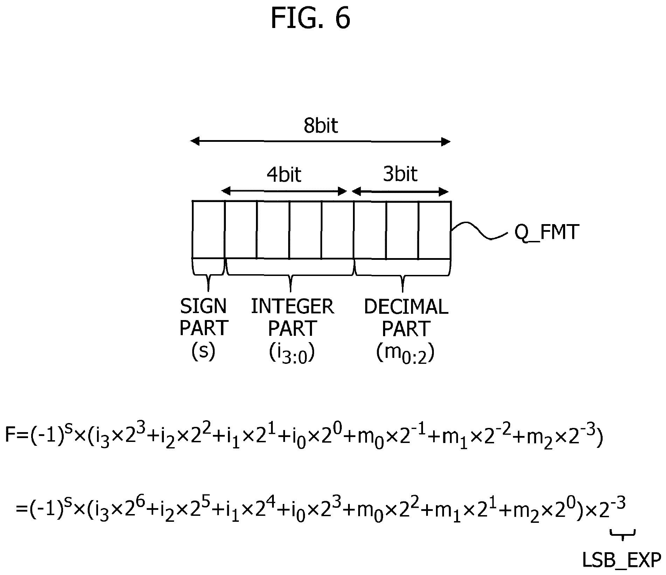

FIG. 6 illustrates the fixed-point number format. A fixed-point number format Q_FMT illustrated in FIG. 6 has a bit length of 8 bits, with 1 bit for the sign bit, 4 bits for the integer part, and 3 bits for the decimal part. In this case, the format Q_FMT is indicated as Q4.3, for example.

When the fixed-point number expressed by this fixed-point number format Q_FMT is [S, i₃, i₂, i₁, i₀, m₀, m₂, m₃], a value F thereof is as indicated by the equation in the first line illustrated in FIG. 6. i₃, i₂, i₁, i₀, m₀, m₂, m₃ are the number of each digit of the fixed-point number, and are "1" or "0" in the case of a binary number; the value F is found by multiplying the number of each digit by the value of each digit (2³ to 2⁻³) and adding the results together. Then, reducing the equation in the first line by the power 2⁻³ of the exponent -3 of the least significant bit m₃ results in the equation in the second line. The exponent -3, which is common to all bits outside the parentheses in the equation in the second line, corresponds to an exponent LSB_EXP in the least significant bit of the fixed-point number format Q_FMT. The power 2⁻³ of the common exponent -3 corresponds to the resolution of the fixed-point number. The "7" numbers of i₃, i₂, i₁, i₀, m₀, m₂, m₃ corresponds to the bit length of the fixed-point number format Q_FMT.

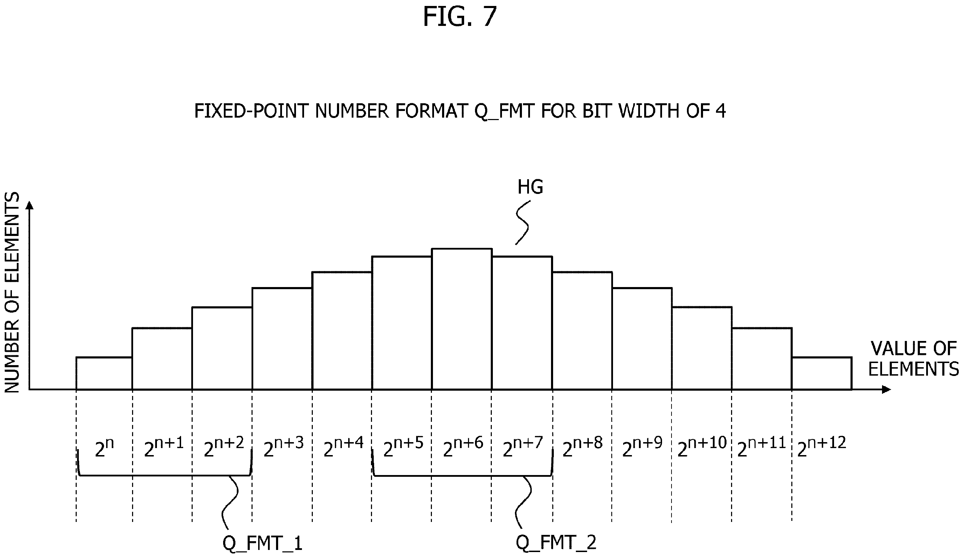

FIG. 7 is a diagram illustrating candidates for the fixed-point number format with respect to the intermediate data. FIG. 7 illustrates a histogram HG of the values of the elements (intermediate data) contained in a set of multiple pieces of intermediate data obtained by performing the operations of the NN or the like for the training data of a mini-batch. The horizontal axis of the histogram HG corresponds to the value of each digit (2ⁿ to 2ⁿ⁺¹²) from the less significant bits to the more significant bits of each element (intermediate data), and the vertical axis corresponds to the number of elements in the bin of each digit's value. In the example illustrated in FIG. 7, the distribution of element values is such that there are a greater number of elements in the middle bins, with fewer elements in the bins with lower element values on the left and higher element values on the right.

FIG. 7 also illustrates the nth power of 2 to the (n+12) power of 2, each indicating the resolution of the fixed-point numbers, in correspondence with the distribution of the histogram HG.

In FIG. 7, the bit length of the fixed-point number is 4 bits, one bit of which is the sign bit, and thus the integer part and the decimal part correspond to a total of 3 bits. In this case, for example, if the format that determines the bit positions in the quantization of the fixed-point number is Q_FMT_1 (with 2ⁿ for the resolution of the lowest bit), the values of elements belonging to the three bins from the minimum element value on the horizontal axis can be expressed with a high level of accuracy by the fixed-point number quantized according to the format Q_FMT_1. However, element values of the fourth bin or more from the lowest element value are quantized by format Q_FMT_1, and thus all significant bits (effective bits) thereof (significant bits mean unsigned bits, "1" when positive and "0" when negative) are lost due to overflow (saturation) as a result of the quantization according to the format Q_FMT_1.

For example, if the fixed-point number format is Q_FMT_2 (with 2ⁿ⁺⁵ for the resolution of the lowest bit), then the element values belonging to the five bins from the lowest element value 2ⁿ are quantized based on the fixed-point number format Q_FMT_2, and the significant bits thereof are truncated (rounded) and lost. Conversely, the values of elements belonging to the five bins from the highest element value 2ⁿ⁺¹² are quantized according to the same format Q_FMT_2, and the significant bits thereof are lost due to overflow (saturation). The values of elements belonging to the sixth to eighth bins from the lowest element value can be expressed with a high level of accuracy using fixed-point numbers, even when quantized according to the format Q_FMT_2.

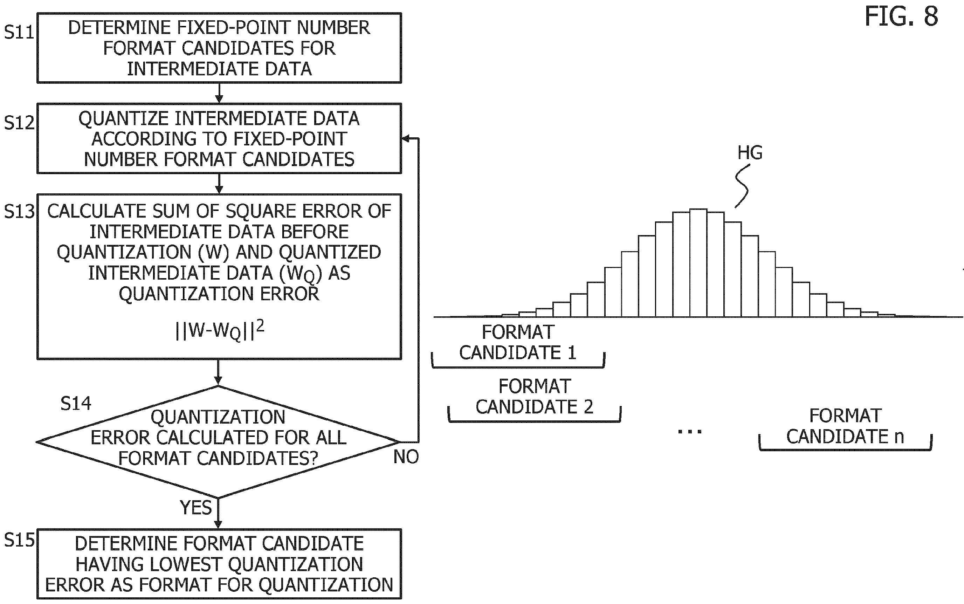

FIG. 8 is a diagram illustrating the processing for determining the fixed-point number format. The fixed-point number format may simply be referred to as the "format" hereinafter.

In the processing S11 of determining the candidates for the fixed-point number format, the processor determines the format candidates as follows with respect to the histogram HG for the elements of the set of intermediate data illustrated on the right side of FIG. 8. In a first method, the format candidates are determined from a lowest-order format candidate 1, which can contain the significant bits of the elements in the leftmost bin, to format candidates 2, 3 ... obtained by shifting the format candidates one bit to the more significant bit side on the right. And finally, the highest-order format candidate n, which can contain the significant bits of the elements in the rightmost bin, is determined.

In a second method, format candidates including from the lowest-order format candidate to the highest-order format candidate that can include all possible minimum values to all possible maximum values of the intermediate data before quantization is uniformly determined. Although the second method needs more work for the determination, but the second method needs fewer subsequent operations for each format candidate.

Next, as illustrated in FIGS. 5 and 8, the processor quantizes all the intermediate data based on the format candidates (S12). As a result, quantized fixed-point number intermediate data is generated for all the intermediate data.

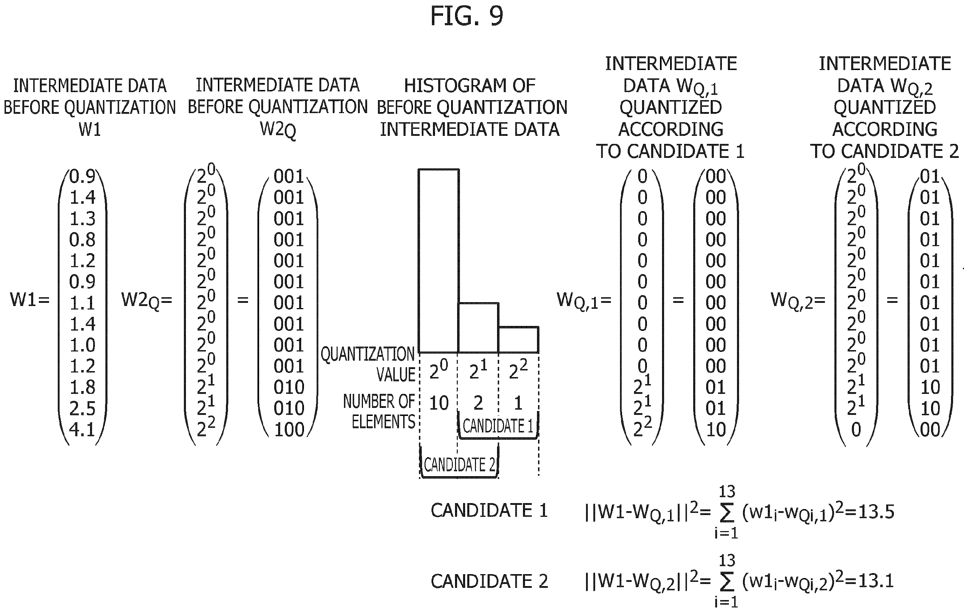

The processor then calculates the quantization error for all the intermediate data using the pre-quantization intermediate data W, the intermediate data W_{Q} quantized according to the format candidates, and the loss function (S13). This loss function calculates the sum of squares of the respective differences between the pre-quantization intermediate data W and the intermediate data W_{Q} quantized according to the format candidates, as illustrated in FIG. 8. The equation for the sum of squares of the differences is illustrated in FIG. 9.

The processor executes the quantization processing S12 and the quantization error calculation processing S13 for all fixed-point number format candidates ("NO" in S14). When the quantization processing S12 and the quantization error calculation processing S13 are complete for all the fixed-point number format candidates ("YES" in S14), the processor determines the fixed-point number format candidate with the lowest quantization error as the fixed-point number format to be used for the quantization (S15).

FIG. 9 is a diagram illustrating a specific example of the fixed-point number format determination processing described above. FIG. 9 illustrates, from the left, first intermediate data W1 before the quantization, second intermediate data W2_{Q} before the quantization, a histogram of the intermediate data W2_{Q} before the quantization, intermediate data W_{Q,1} after quantization according to format candidate 1, and intermediate data W_{Q,2} after quantization according to format candidate 2.

The first intermediate data W1 before the quantization is 13 pieces of decimal-format intermediate data. The decimal-format intermediate data W1 is stored in a register in the processor as, for example, floating point numbers.

The second intermediate data W2_{Q} before the quantization is intermediate data obtained by converting the first intermediate data W1 before the quantization into a 3-bit fixed-point number. The first intermediate data W1 before the quantization is floating point number data, and thus when converted to a 3-bit fixed-point number, the data may be quantized by having the less significant bits truncated (rounded), the more significant bits overflown (saturation).

In the histogram of the intermediate data W2_{Q} before the quantization, the number of significant bits (that is the number of unsigned bits, "1" when positive and "0" when negative) of each of the three bits is counted as the number of elements in each bin, in the same manner as in FIG. 7. The quantization values in FIG. 9 correspond to the element values in FIG. 7. In FIG. 9, the horizontal axis of the histogram goes from less significant bits to more significant bits from the left to the right; conversely, the three bits of intermediate data W2_{Q} before the quantization go from less significant bits to more significant bits from the right to the left.

The stated histogram indicates the positions of the fixed-point number format candidates 1 and 2, in the same manner as in FIG. 7. Format candidate 1 is a fixed-point number format of the two most significant bits in three bits W2_{Q}. Format candidate 2, meanwhile, is a fixed-point number format of the two least significant bits in three bits W2_{Q}.

As a result, the intermediate data W_{Q,1} quantized according to format candidate 1 of the two most significant bits, and the intermediate data W_{Q,2} quantized according to format candidate 2 of the two least significant bits, are as illustrated in FIG. 9. Both format candidates 1 and 2 are two bits, lower or fewer bits than the number of bits, three bits, in the intermediate data W2_{Q}.

Accordingly, when the intermediate data W1 before the quantization (a floating point number) is converted to a fixed-point number according to format candidate 1, the less significant bits lower than 2¹ are lost due to truncate and quantized to a 2-bit fixed-point number. On the other hand, when the intermediate data W1 before the quantization (a floating point number) is converted to a fixed-point number according to format candidate 2, the less significant bits lower than 2° are similarly lost due to truncate and quantized to a 2-bit fixed-point number and, the more significant bits of 2² or more are lost due to overflow.

Next, when the intermediate data W2_{Q} before the quantization (a 3-bit fixed-point number) is converted to a fixed-point number according to format candidate 1, the least significant bit among the three bits is lost due to truncate. On the other hand, when the intermediate data W2_{Q} before the quantization (a 3-bit fixed-point number) is converted to a fixed-point number according to format candidate 2, the most significant bit among the three bits is lost due to overflow.

The lower-right part of FIG. 9 indicates equations for the loss function for finding the quantization error in the case where the intermediate data W1 before the quantization (a floating point number) is quantized according to format candidates 1 and 2, respectively. The loss function is the sum of squares of the differences between the intermediate data W1 before the quantization and the quantized intermediate data W_{Q,1}, W_{Q,2}, for each of the multiple pieces of intermediate data. According to these equations, candidate 2 has a lower quantization error, and the processor therefore determines format candidate 2 as the fixed-point number format.

Additionally, as shown in FIG. 9, the quantization error is calculated by quantizing the intermediate data W2_{Q} before the quantization (a 3-bit fixed-point number) according to format candidates 1 and 2, respectively. All of the intermediate data is positive, and in the case of candidate 1, the least significant bit "1" of the 10 pieces of intermediate data is truncated, resulting in a quantization error of "10". On the other hand, in the case of candidate 2, the "1" of the most significant bit of the 13th piece of intermediate data is simply overflown, and the quantization error is therefore "2² = 4". Thus in this case as well, candidate 2 has a lower quantization error, and the processor therefore determines format candidate 2 as the fixed-point number format.

Returning to FIG. 5, the processor quantizes (converts to a fixed-point number according to the determined format) all the intermediate data computed with the training data of the previous mini-batch, according to the fixed-point number format which has been determined (S20). The processor then executes the forward propagation processing S3 and the back-propagation process S4 indicated in FIG. 3 for the next mini-batch of training data, and updates the parameters such as the weights (S5). The processor repeats process steps of S10 to S5 until the computations are complete for the training data in all of the mini-batches (S6).

As described above, the intermediate data before the quantization is floating point number data, or fixed-point number data that has a longer bit length than the fixed-point number format used in the quantization. The floating point number data before the quantization or the fixed-point number data before the quantization is quantized according to the fixed-point number format which has been determined, and the quantized fixed-point number data is generated as a result.

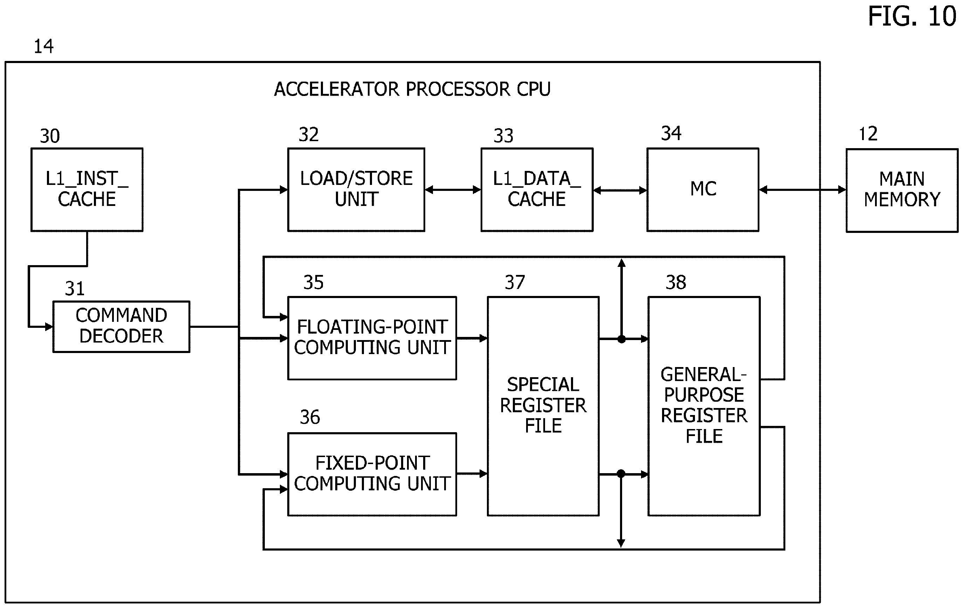

FIG. 10 is a diagram illustrating an example of the configuration of the accelerator processor 14. The accelerator processor 14 stores instructions and some of the data stored in the main memory 12 in an L1 instruction cache 30 and an L1 data cache 33, respectively. In the accelerator processor 14, a instruction decoder 31 decodes a instruction fetched from the L1 instruction cache 30, and supplies the decoded instruction to one of a load/store unit 32, a floating-point computing unit 35, and a fixed-point computing unit 36, in accordance with the type of the instruction. Each of these computing units 32, 35, and 36 executes the supplied instruction.

In the event of a load instruction, the load/store unit 32 reads out data from the main memory 12 via a memory controller 34 and stores the data in the L1 data cache 33. The floating-point computing unit 35 computes input variables of the instruction read out from a register in a general-purpose register file 38, and stores a result of the computation in a register in a special register file 37 or the general-purpose register file 38. Likewise, the fixed-point computing unit 36 computes input variables of the instruction, and stores a result of the computation in the special register file 37 or the general-purpose register file 38. The data in the general-purpose register file 38 is stored in the main memory 12 via the L1 data cache 33 by the load/store unit 32, which executes a store instruction.

According to the present embodiment, for example, the accelerator processor 14 uses the fixed-point computing unit 36 to execute operations of the NN or the like, quantizes the intermediate data of the result of the computation according to the fixed-point number format which has been determined, and stores the quantized intermediate data in a register in the general-purpose register file 38, the main memory 12, or the like. Furthermore, the accelerator processor 14 reads out the intermediate data stored in the register of the general-purpose register file, the main memory 12, and the like, and uses the fixed-point computing unit 36 to execute the operations of the NN or the like.

Because the number of bits of the intermediate data quantized according to the fixed-point number format which has been determined is low or few, the NN or the like only needs a short amount of time for operations, and the capacity of the general-purpose register file, the main memory, and so on for storing the intermediate data is therefore reduced.

On the other hand, as described above, the host processor 10 executes the processing for determining the optimal fixed-point number format for the intermediate data, the processing for quantizing the intermediate data according to the fixed-point number format which has been determined, and so on.

In FIG. 2, if the information processing apparatus 1 does not include the accelerator processor 14 which executes the operations of the NN or the like, the operations of the NN or the like are executed by the host processor 10. In this case, the host processor 10 has the configuration illustrated in FIG. 10, executing the operations of the NN or the like using a fixed-point computing unit, quantizing the intermediate data that is the result of the operations according to a fixed-point number format, and storing the quantized intermediate data in a register of a general-purpose register file, the main memory, or the like. The host processor 10 also reads out intermediate data in the general-purpose register file, the main memory, and the like, and executes the operations of the NN or the like using the fixed-point computing unit 36. The host processor 10 also executes the processing for determining the optimal fixed-point number format for the intermediate data, the processing for quantizing the intermediate data according to the fixed-point number format which has been determined, and so on.

### Second Embodiment

In the first embodiment, the loss function for calculating the quantization error is the sum of squares of the differences between the intermediate data before the quantization and the intermediate data quantized according to a fixed-point number format. In contrast, in a second embodiment, the loss function for calculating the quantization error is a function for finding an L1 norm. In other words, the loss function for calculating the quantization error is the sum of the absolute value of the differences between the intermediate data before the quantization and the intermediate data quantized according to a fixed-point number format. Whether to use the sum of squares of the differences or the L1 norm can be selected as is optimal, in accordance with the intermediate data calculated in the operations of the NN or the like.

### Third Embodiment

In the first embodiment, the quantization error is calculated for all of the multiple fixed-point number format candidates corresponding to a range from the minimum to maximum values of the intermediate data, and the fixed-point number format candidate corresponding to the lowest quantization error is determined as the fixed-point number format, as illustrated in FIG. 5.

In contrast, in a third embodiment, the fixed-point number format is determined in the following manner so that the number of calculations for the quantization error is reduced.

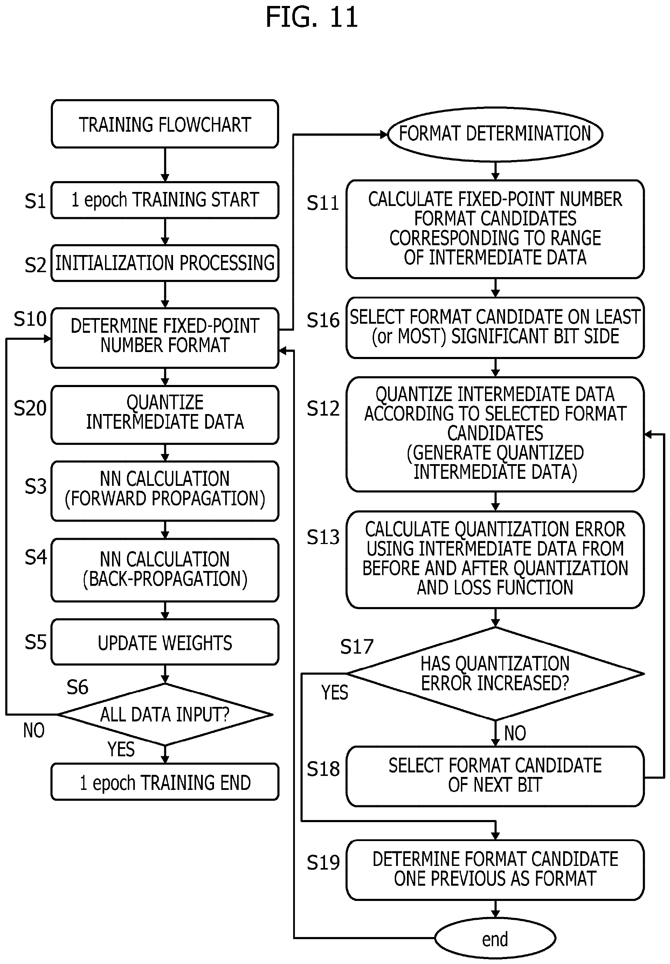

FIG. 11 illustrates flowcharts of processing for determining the fixed-point number format according to the third embodiment. The flowchart on the left side of FIG. 11 is the same as FIG. 5. However, of the flowchart of the format determination on the right side of FIG. 11, processing steps S16 to S19 are different from FIG. 5.

In the format determination processing illustrated in FIG. 11, the processor calculates format candidates corresponding to a range from minimum to maximum values of the intermediate data (S11). These format candidates are extracted, as format candidates, from the fixed-point number format corresponding to the minimum value of the multiple pieces of intermediate data to the fixed-point number format corresponding to the maximum value of the multiple pieces of intermediate data. The number of format candidates can be reduced by limiting the format candidates to a range from the minimum to maximum values of the intermediate data.

Next, the processor selects, from the extracted multiple fixed-point number format candidates, a format candidate on the least significant bit side, for example (S16). The format candidate on the least significant bit side is the format candidate with the lowest exponent for the least significant bit in the fixed-point number according to the format. The processor then executes the same processing steps S12 and S13 as in FIG. 5. Next, the processor determines whether or not the calculated quantization error is higher than the quantization error of the previous format candidate (S17), and if not ("NO" in S17), the processor selects the format candidate for the next bit (one more significant bit) (S18), and again executes the same processing steps S12 and S13 as in FIG. 5.

The processor repeats the above processing until the calculated quantization error increases. When the calculated quantization error increases ("YES" in S17), the processor ends the the quantization error obtaining processing steps S12 and S13. Then, because the quantization error of the format candidate one previous corresponds to a minimum amount, the processor determines the format candidate one previous to be the fixed-point number format (S19).

In the processing S16, the processor may select, from the extracted multiple fixed-point number format candidates, a format candidate on the most significant bit side, for example. The format candidate on the most significant bit side is the format candidate with the highest exponent for the least significant bit in the fixed-point number according to the format. In that case, in the processing S18, the processor selects the format candidate for one less significant bit as the format candidate for the next bit.

By performing the fixed-point number format determination processing described above, the number of calculations for the quantization error corresponding to the format candidate can be reduced.

### Fourth Embodiment

In the first embodiment, the intermediate data is quantized according to the optimal fixed-point number format, and processed or stored in a register, memory, or the like, in the processing for training the NN or the like.

In contrast, in a fourth embodiment, the intermediate data, which has been calculated by performing the operations of the NN or the like on input data for inference, is quantized according to the optimal fixed-point number format, and processed or stored in a register, memory, or the like, in the inference processing of the NN or the like. In the processing for training the NN or the like, the intermediate data contains parameters, including weights, gradients, and the like, as well as activation data. However, since no back-propagation processing is used in inference processing of the NN or the like, the intermediate data does not include gradients calculated through back-propagation processing, and instead includes only weights and activation data.

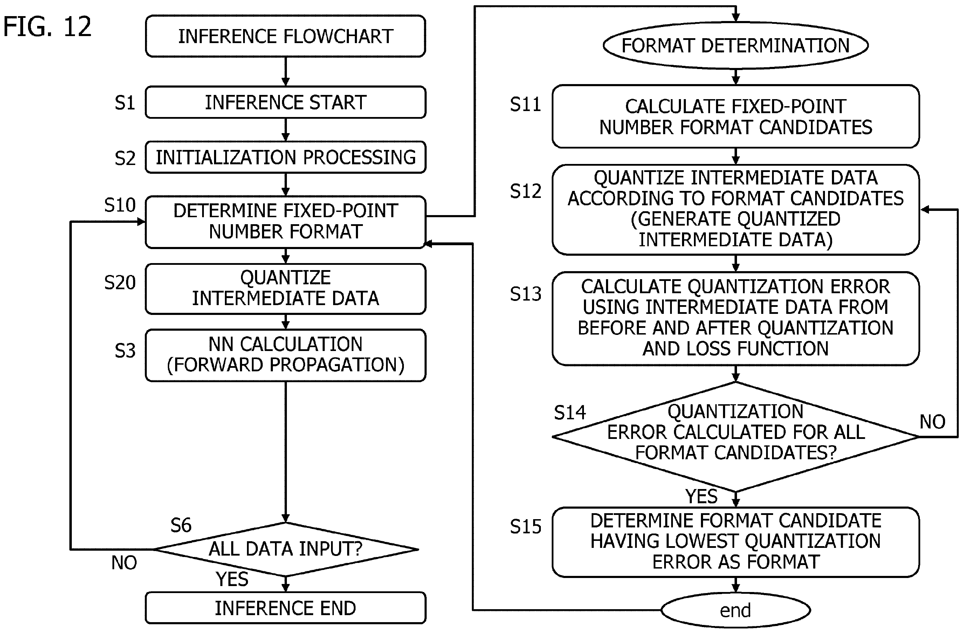

FIG. 12 is a diagram illustrating a flowchart for inference according to the fourth embodiment. In the inference processing, the input data, which is explaining variables of the NN or the like, is input, the operations of the NN or the like are executed, and output data is output as an inference result. The flowchart in FIG. 12 does not include the back-propagation processing S4 and the weight update processing S5 included in the flowchart in FIG. 5. The other processes are the same as in FIG. 5.

In FIG. 12, at the start of the inference, the processor executes initialization processing that divides the input data for the inference (S2), executes forward propagation processing of the NN or the like for a predetermined number of input data (S3), and when the forward propagation processing for the predetermined number of input data has ended, determines the optimal fixed-point number format for the intermediate data (S10), and quantizes the intermediate data according to the determined format (S20).

### Fifth Embodiment

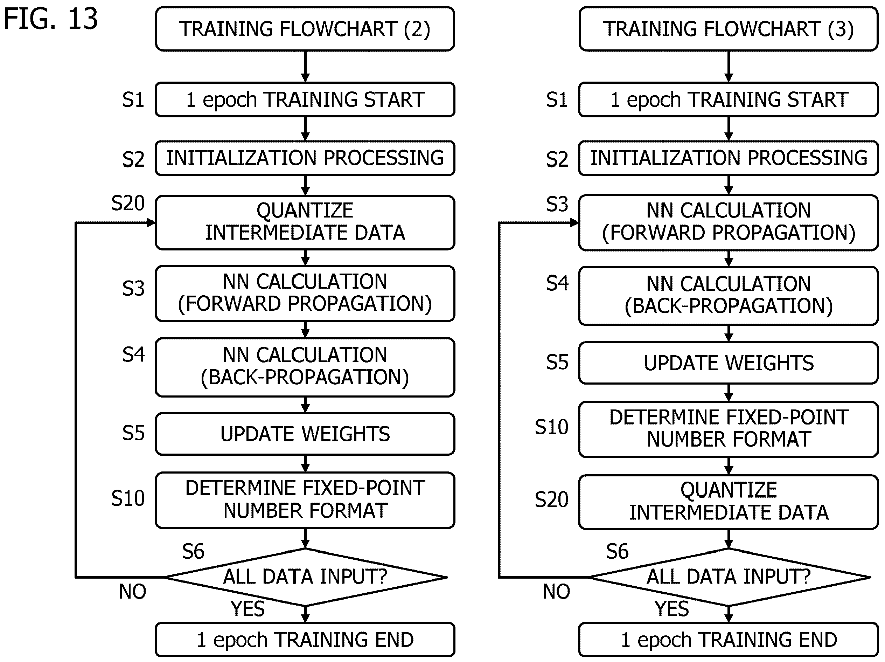

FIG. 13 is a diagram illustrating two types of training flowcharts, according to a fifth embodiment. In a second training flowchart (2), the processor executes the fixed-point number format determination processing S10 after performing the forward propagation processing S3, the back-propagation processing S4, and the weight update S5 for the training data of the mini-batch. Then, before executing the forward propagation processing S3 and the back-propagation processing S4 for the training data of the next mini-batch, the intermediate data calculated in the previous mini-batch is quantized according to the fixed-point number format which has been determined (S20). When executing the forward propagation processing S3 and the back-propagation processing S4 on the training data in the first mini-batch, the intermediate data (e.g., the initial values of the weights) is quantized according to a predetermined fixed-point number format.

In a third training flowchart (3), the processor executes the fixed-point number format determination processing S10 and the quantization processing S20 of quantizing the intermediate data according to the fixed-point number format which has been determined after performing the forward propagation processing S3, the back-propagation processing S4, and the weight update S5 for the training data of the mini-batch. In this case, when executing the forward propagation processing S3 and the back-propagation processing S4 on the training data in the first mini-batch, no quantization is performed according to the fixed-point number format.

### Working Example

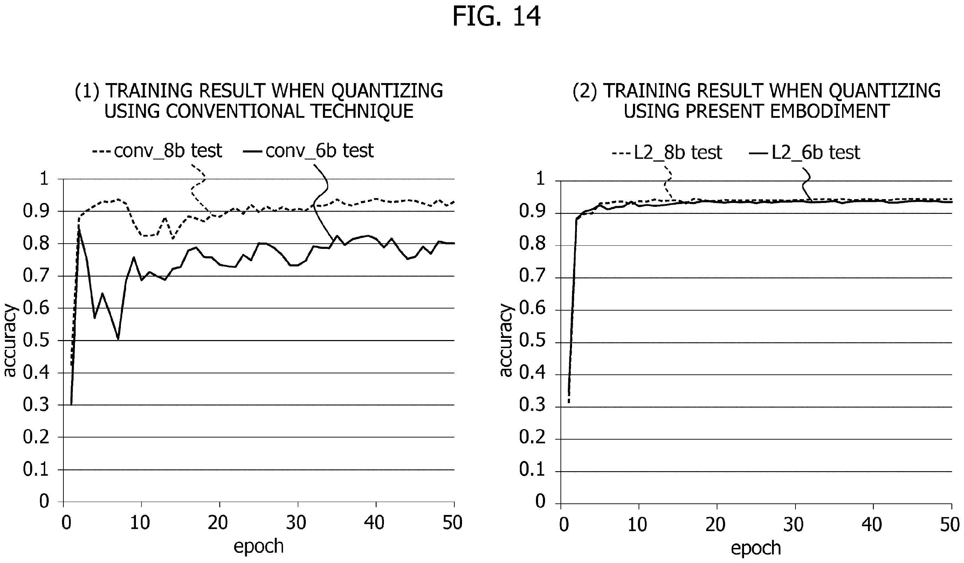

FIG. 14 illustrates a training result (1) of a handwritten number recognition task when the intermediate data is quantized through the method described in Japanese Patent Application Publication No. 2018-124681, and a training result (2) of the same task when the intermediate data is quantized according to the present embodiment.

In the training result (1) obtained when quantizing the intermediate data according to a format determined based on statistical information of the intermediate data as described in Japanese Patent Application Publication No. 2018-124681, it can be seen that the quantization error is higher when the number of bits of the fixed-point number of the intermediate data is 6 bits than 8 bits, and the training accuracy therefore converges on a low accuracy. However, in the training result (2) obtained when quantizing the intermediate data according to a format with lower quantization error, as described in the present embodiment, the training accuracy converges on a high accuracy both when the number of bits of the fixed-point number of the intermediate data is 8 bits and when that number is 6 bits.

As described above, according to the present embodiment, intermediate data obtained through operations of an NN or the like is quantized according to a fixed-point number format having lower quantization error, and the training accuracy of the NN or the like can therefore be increased.

According to the first aspect, quantization error can be reduced.

## Claims

1. An information processing apparatus that executes training of a neural network, the apparatus comprising:
a processor; and
a memory that is accessed by the processor, wherein
the processor:
quantizes a plurality of first intermediate data obtained by a predetermined operation of the training into a plurality of intermediate data of a first fixed-point number respectively according to a first fixed-point number format having a first bit length and first exponent information of a least significant bit of a fixed-point number;
obtains a first quantization error respectively between the plurality of first intermediate data and the plurality of intermediate data of the first fixed-point number;
quantizes the plurality of first intermediate data into a plurality of intermediate data of a second fixed-point number respectively according to a second fixed-point number format having a second bit length and second exponent information of a least significant bit of a fixed-point number;
obtains a second quantization error respectively between the plurality of first intermediate data and the plurality of intermediate data of the second fixed-point number;
compares the first quantization error with the second quantization error and determine as a determined fixed-point number format the fixed-point number format having the lower of the first and second quantization errors; and
executes the predetermined operation with a plurality of intermediate data of a determined fixed-point number obtained by quantizing the plurality of first intermediate data according to the determined fixed-point number format.

2. The information processing apparatus according to claim 1, wherein the fixed-point number format defines a range of digits when limiting the first intermediate data by the bit length through rounding processing and saturation processing by the processor.

3. The information processing apparatus according to claim 1, wherein the processor further:
determines a plurality of fixed-point number format candidates, each having a plurality of candidates for the exponent information of the least significant bit respectively, based on a range of values in the plurality of first intermediate data;
generates a plurality of quantized intermediate data by quantizing the plurality of first intermediate data based on the plurality of fixed-point number format candidates respectively, and obtains a plurality of quantization errors respectively between the plurality of first intermediate data and the plurality of quantized intermediate data, the plurality of quantization errors corresponding to the plurality of fixed-point number format candidates respectively; and
in the determining of the determined fixed-point number format, determines as the determined fixed-point number format the fixed-point number format candidate corresponding to the lowest of the plurality of quantization errors.

4. The information processing apparatus according to claim 3, wherein in the obtaining of the plurality of quantization errors, the processor calculates the plurality of quantization errors, in order, from a candidate for maximum or minimum exponent information of the least significant bit toward a candidate for minimum or maximum exponent information of the least significant bit among the plurality of fixed-point number format candidates, and ends the obtaining of the plurality of quantization errors when one of the plurality of quantization errors switches from decreasing to increasing.

5. The information processing apparatus according to claim 1, wherein the processor executes determination on the determined fixed-point number format in training processing of executing training of the neural network by using training data.

6. The information processing apparatus according to claim 1, wherein determination on the determined fixed-point number format is executed in inference processing of executing inference of a neural network having parameters learned by using training data.

7. The information processing apparatus according to claim 1, wherein the processor calculates the first and second quantization errors by calculating a sum of square error respectively between the plurality of first intermediate data and the plurality of quantized intermediate data or by calculating a sum of an absolute value of a difference respectively between the plurality of first intermediate data and the plurality of quantized intermediate data.

8. The information processing apparatus according to claim 1, wherein the plurality of first intermediate data is floating point number data before quantizing according to a fixed-point number format, or is fixed-point number data having a longer bit length than a bit length of the fixed-point number format used in the quantizing.

9. A non-transitory computer-readable storage medium storing therein a computer-readable neural network computation program for causing a computer to execute a process comprising:
quantizing a plurality of first intermediate data obtained by a predetermined operation of training a neural network into a plurality of intermediate data of a first fixed-point number respectively according to a first fixed-point number format having a first bit length and first exponent information of a least significant bit of a fixed-point number;
obtaining a first quantization error respectively between the plurality of first intermediate data and the plurality of intermediate data of the first fixed-point number;
quantizing the plurality of first intermediate data into a plurality of intermediate data of a second fixed-point number respectively according to a second fixed-point number format having a second bit length and second exponent information of a least significant bit of a fixed-point number;
obtaining a second quantization error respectively between the plurality of first intermediate data and the plurality of intermediate data of the second fixed-point number;
comparing the first quantization error with the second quantization error and determining as a determined fixed-point number format the fixed-point number format having the lower of the first and second quantization errors; and
executing the predetermined operation with a plurality of intermediate data of a determined fixed-point number obtained by quantizing the plurality of first intermediate data according to the determined fixed-point number format.

10. A neural network computation method, comprising:
quantizing a plurality of first intermediate data obtained by a predetermined operation of training a neural network into a plurality of intermediate data of a first fixed-point number respectively according to a first fixed-point number format having a first bit length and first exponent information of a least significant bit of a fixed-point number;
obtaining a first quantization error respectively between the plurality of first intermediate data and the plurality of intermediate data of the first fixed-point number;
quantizing the plurality of first intermediate data into a plurality of intermediate data of a second fixed-point number respectively according to a second fixed-point number format having a second bit length and second exponent information of a least significant bit of a fixed-point number;
obtaining a second quantization error respectively between the plurality of first intermediate data and the plurality of intermediate data of the second fixed-point number;
comparing the first quantization error with the second quantization error and determining as a determined fixed-point number format the fixed-point number format having the lower of the first and second quantization errors; and
executing the predetermined operation with a plurality of intermediate data of a determined fixed-point number obtained by quantizing the plurality of first intermediate data according to the determined fixed-point number format.
